# FASCICULE DE BREVET EUROPEEN

(11) **EP 4 551 433 B1**
(45) Date de publication et mention de la délivrance du brevet: **02.09.2026**
(21) Numéro de dépôt: 23741297.8
(22) Date de dépôt: 06.07.2023
(51) Int. Cl.: B60N 2/865

(54) **APPUI-TÊTE DE SIÈGE DE VÉHICULE AUTOMOBILE**
KOPFSTÜTZE FÜR EINEN KRAFTFAHRZEUGSITZ
HEADREST FOR A MOTOR VEHICLE SEAT

(30) Priorité: 07.07.2022 FR 2206989
(43) Date de publication de la demande: 14.05.2025
(73) Titulaire: TESCA France, 92977 Paris La Défense Cedex (FR)
(72) Inventeur: GEORGES, Laurent, 92977 Paris La Défense Cedex (FR); LEFEVRE, Steve, 92977 Paris La Défense Cedex (FR)
(74) Mandataire: Sayettat, Julien Christian
(86) Numéro de dépôt international: PCT/EP2023/068780
(87) Numéro de publication internationale: WO 2024/008892

(56) Documents cités:
- EP-A1- 3 153 347
- DE-B3- 102018 214 952

## Description

L'invention concerne un appui-tête de siège de véhicule automobile.

Il est connu, par exemple de EP 3153347 A1, de réaliser un appui-tête de siège de véhicule automobile, ledit appui-tête comprenant :
- une armature de montage sur un dossier dudit siège,
- un corps principal - notamment en matériau plastique moulé - monté sur ladite armature,
- un corps secondaire - notamment en matériau plastique moulé - monté en coulissement longitudinal sur ledit corps principal, de sorte que ledit corps secondaire puisse adopter une pluralité de positions de réglage longitudinal, ledit corps secondaire étant pourvu d'une paroi de réception de la tête d'un occupant dudit siège,
- un dispositif de verrouillage dudit corps secondaire dans la position de réglage choisie, ledit dispositif comprenant un loquet monté en coulissement vertical sur ledit corps principal entre une position de verrouillage, où il coopère avec une crémaillère de verrouillage s'étendant longitudinalement sur ledit corps secondaire, et une position de déverrouillage, où il s'écarte de ladite crémaillère pour libérer le coulissement dudit corps secondaire, ledit dispositif comprenant en outre un moyen ressort d'actionnement dudit loquet en verrouillage et un moyen d'actionnement dudit loquet en déverrouillage à l'encontre dudit moyen ressort, les géométries de ladite crémaillère et dudit loquet étant respectivement agencées de manière à bloquer le coulissement dudit corps secondaire vers l'arrière et à permettre son coulissement vers l'avant sans avoir à déverrouiller ledit dispositif.

Avec un tel agencement, l'occupant du siège effectue une simple traction du corps secondaire vers l'avant pour avancer sa position de réglage.

En revanche, il lui faut actionner en déverrouillage le dispositif de verrouillage pour pouvoir repousser le corps secondaire vers l'arrière, le blocage dudit corps en coulissement arrière en l'absence de déverrouillage volontaire étant dicté par des considérations de sécurité, l'appui-tête devant rester bloqué dans sa position de réglage longitudinal en cas de choc de la tête de l'occupant sur sa paroi de réception.

Cependant, un tel agencement présent l'inconvénient que, en cas d'actionnement dissymétrique du corps secondaire en réglage vers l'avant, il peut effectuer une amorce de rotation par rapport au corps principal, ce qui est préjudiciable en matière de qualité perçue par l'utilisateur aussi bien en termes de bruit que de rigidité de l'ensemble.

L'invention a pour but de pallier cet inconvénient.

A cet effet, l'invention propose un appui-tête de siège de véhicule automobile, ledit appui-tête comprenant :
- une armature de montage sur un dossier dudit siège,
- un corps principal monté sur ladite armature,
- un corps secondaire monté en coulissement longitudinal sur ledit corps principal, de sorte que ledit corps secondaire puisse adopter une pluralité de positions de réglage longitudinal, ledit corps secondaire étant pourvu d'une paroi de réception de la tête d'un occupant dudit siège,
- un dispositif de verrouillage dudit corps secondaire dans la position de réglage choisie, ledit dispositif comprenant un loquet monté en coulissement vertical sur ledit corps principal entre une position de verrouillage, où il coopère avec une crémaillère de verrouillage s'étendant longitudinalement sur ledit corps secondaire, et une position de déverrouillage, où il s'écarte de ladite crémaillère pour libérer le coulissement dudit corps secondaire, ledit dispositif comprenant en outre un moyen ressort d'actionnement dudit loquet en verrouillage et un moyen d'actionnement dudit loquet en déverrouillage à l'encontre dudit moyen ressort, les géométries de ladite crémaillère et dudit loquet étant respectivement agencées de manière à bloquer le coulissement dudit corps secondaire vers l'arrière et à permettre son coulissement vers l'avant sans avoir à déverrouiller ledit dispositif,

ledit appui-tête présentant en outre les caractéristiques suivantes :
   - ledit loquet est pourvu de deux rails disposés latéralement de part et d'autre, lesdits rails s'étendant longitudinalement et saillant verticalement,
   - lesdits rails sont reçus en coulissement dans deux nervures respectives prévues dans ledit corps secondaire,
de manière à bloquer ledit loquet en rotation selon un axe vertical lors de l'actionnement en réglage dudit corps secondaire.

Dans cette description, les termes de positionnement dans l'espace (longitudinal, transversal, vertical, horizontal, supérieur, inférieur, avant, arrière, ...) sont pris en référence à l'appui-tête disposé dans le véhicule en situation d'utilisation.

Avec l'agencement proposé, en cas d'actionnement dissymétrique du corps secondaire en réglage vers l'avant, on empêche la rotation dudit corps secondaire par rapport au corps principal, ce qui améliore la rigidité de l'ensemble et minimise les bruits parasites, et optimise donc la qualité perçue par l'utilisateur.

D'autres particularités et avantages de l'invention apparaîtront dans la description qui suit, faite en référence aux figures jointes, dans lesquelles :

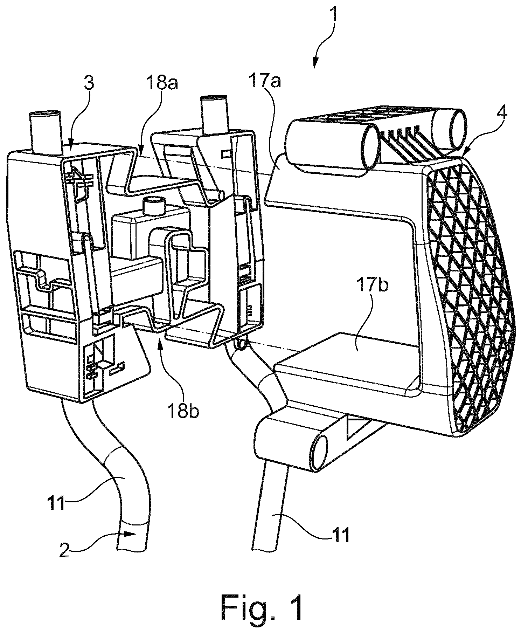

[Fig.1] est une vue semi-éclatée schématique en perspective partielle d'un appui-tête selon une réalisation,

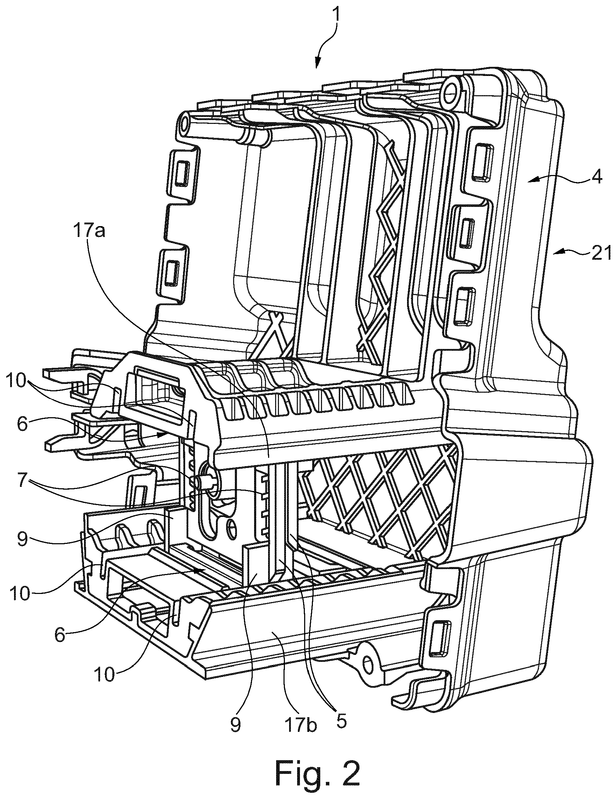

[Fig.2] est une vue schématique rapprochée de détail de la figure 1 sous un autre angle de vue,
[Fig.3] est une vue schématique rapprochée de détail de la figure 2 sous un autre angle de vue,
[Fig.4] est une vue schématique partielle en coupe longitudinale verticale de l'appui-tête des figures précédentes selon un mode de réalisation du dispositif de verrouillage du corps secondaire, ledit dispositif étant activé en verrouillage.

En référence aux figures, on décrit un appui-tête 1 de siège de véhicule automobile, ledit appui-tête comprenant :
- une armature 2 de montage sur un dossier dudit siège,
- un corps principal 3 - notamment en matériau plastique moulé - monté sur ladite armature,
- un corps secondaire 4 - notamment en matériau plastique moulé - monté en coulissement longitudinal sur ledit corps principal, de sorte que ledit corps secondaire puisse adopter une pluralité de positions de réglage longitudinal, ledit corps secondaire étant pourvu d'une paroi de réception 21 de la tête d'un occupant dudit siège,
- un dispositif de verrouillage dudit corps secondaire dans la position de réglage choisie, ledit dispositif comprenant un loquet 5 monté en coulissement vertical sur ledit corps principal entre une position de verrouillage, où il coopère avec une crémaillère 6 de verrouillage s'étendant longitudinalement sur ledit corps secondaire, et une position de déverrouillage, où il s'écarte de ladite crémaillère pour libérer le coulissement dudit corps secondaire, ledit dispositif comprenant en outre un moyen ressort 7 d'actionnement dudit loquet en verrouillage et un moyen d'actionnement, non représenté, dudit loquet en déverrouillage à l'encontre dudit moyen ressort, les géométries de ladite crémaillère et dudit loquet étant respectivement agencées de manière à bloquer le coulissement dudit corps secondaire vers l'arrière et à permettre son coulissement vers l'avant sans avoir à déverrouiller ledit dispositif,

ledit appui-tête présentant en outre les caractéristiques suivantes :
   - ledit loquet est pourvu de deux rails 9 disposés latéralement de part et d'autre, lesdits rails s'étendant longitudinalement et saillant verticalement,
   - lesdits rails sont reçus en coulissement dans deux nervures 10 respectives prévues dans ledit corps secondaire,
de manière à bloquer ledit loquet en rotation selon un axe vertical lors de l'actionnement en réglage dudit corps secondaire.

Selon la réalisation représentée, l'armature comprend deux tiges 11 métalliques parallèles.

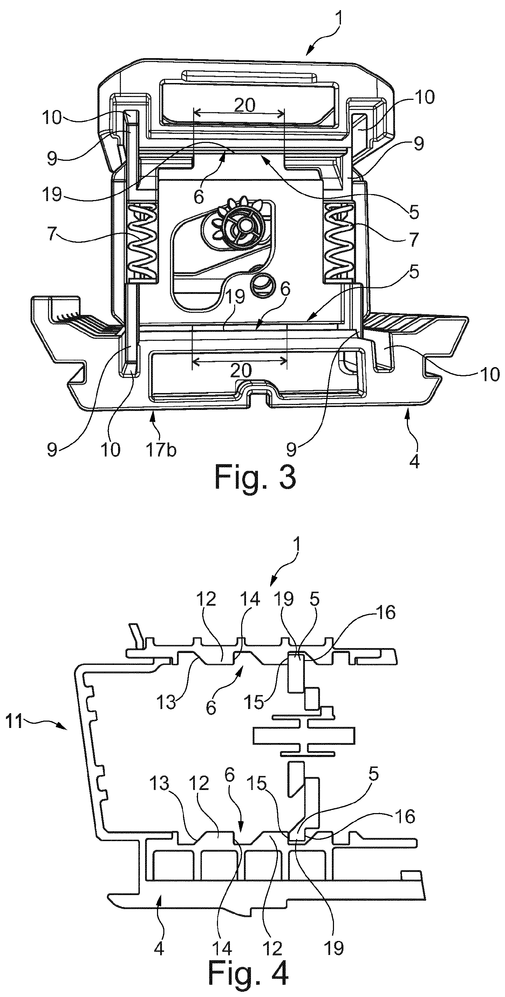

Selon un premier mode de réalisation du dispositif de verrouillage du bloc secondaire 4, représenté en figure 4, la crémaillère 6 présente une pluralité de créneaux 12 dont la face avant 13 est inclinée par rapport à la verticale et dont la face arrière 14 est sensiblement verticale, le loquet 5 présentant des faces avant 15 et arrière 16 parallèles et sensiblement verticales.

Selon un deuxième mode de réalisation du dispositif de verrouillage du bloc secondaire 4, correspondant à une alternative non représentée, la crémaillère 6 présente une pluralité de créneaux 12 dont les faces avant 13 et arrière 14 sont parallèles et sensiblement verticales, le loquet 5 présentant une face arrière 16 inclinée par rapport à la verticale et une face avant 15 sensiblement verticale.

Ces deux modes de réalisation permettent de bloquer le coulissement du corps secondaire 4 vers l'arrière et d'autoriser son coulissement vers l'avant sans avoir à déverrouiller le dispositif de verrouillage dudit corps.

Selon la réalisation représentée, l'appui-tête 1 comprend deux loquets 5 coopérant chacun avec une crémaillère 6 respective, ce qui permet de renforcer le verrouillage.

Selon la réalisation représentée, les loquets 5 sont en forme générale de plaques coulissant l'une contre l'autre selon deux directions verticales opposées.

Selon la réalisation représentée, une crémaillère 6 est disposée sur un organe de guidage 17a,17b en coulissement du corps secondaire 4 sur le corps principal 3.

Selon la réalisation représentée, l'organe de guidage 17 est sous forme d'un tenon solidaire du corps secondaire 4, ledit tenon coulissant dans une mortaise 18a,18b prévue dans le corps principal 3.

Selon la réalisation représentée, l'appui-tête comprend un tenon supérieur 17a et un tenon inférieur 17b coulissant chacun dans une crémaillère supérieure 18a et inférieure 18b respective.

Selon la réalisation représentée, un loquet 5 présente une partie de verrouillage 19 s'insérant dans la crémaillère 6, ladite partie étant disposée en zone médiane dudit loquet observé en vue longitudinale, ladite partie présentant une cote transversale 20 inférieure à 30 mm, de manière à assurer un centrage du verrouillage propice à la rigidité de l'ensemble quand le corps secondaire 4 est actionné en réglage vers l'avant.

De façon non représentée, le corps principal 3 peut être monté en coulissement sur l'armature 2 de manière à pouvoir adopter une pluralité de positions de réglage vertical, ledit appui-tête comprenant un dispositif de verrouillage dudit corps principal dans la position de réglage choisie.

Selon une réalisation non représentée, le dispositif de verrouillage du corps principal 3 comprend :
- une pluralité de crans de verrouillage s'étageant axialement sur au moins une des tiges 11 (le terme « axialement » étant considéré en référence à l'axe d'extension de ladite tige) de manière à définir une tige crantée,
- au moins une saillie de verrouillage montée mobile par rapport audit corps principal entre une position de verrouillage, où ladite saillie s'insère dans un desdits crans, et une position de déverrouillage, où ladite saillie se retire dudit cran afin de libérer le coulissement dudit corps.

De façon non représentée, les dispositifs de verrouillage des corps principal 3 et secondaire 4 peuvent être actionnés en déverrouillage par un moyen d'actionnement commun, ledit moyen comprenant par exemple un bouton d'actionnement - par exemple sous forme de bouton poussoir - d'une traverse montée sur ledit corps principal en coulissement transversal et coopérant avec lesdits dispositifs.

## Revendications

1. Appui-tête (1) de siège de véhicule automobile, ledit appui-tête comprenant :
• une armature (2) de montage sur un dossier dudit siège,
• un corps principal (3) monté sur ladite armature,
• un corps secondaire (4) monté en coulissement longitudinal sur ledit corps principal, de sorte que ledit corps secondaire puisse adopter une pluralité de positions de réglage longitudinal, ledit corps secondaire étant pourvu d'une paroi (21) de réception de la tête d'un occupant dudit siège,
• un dispositif de verrouillage dudit corps secondaire dans la position de réglage choisie, ledit dispositif comprenant un loquet (5) monté en coulissement vertical sur ledit corps principal entre une position de verrouillage, où il coopère avec une crémaillère (6) de verrouillage s'étendant longitudinalement sur ledit corps secondaire, et une position de déverrouillage, où il s'écarte de ladite crémaillère pour libérer le coulissement dudit corps secondaire, ledit dispositif comprenant en outre un moyen ressort (7) d'actionnement dudit loquet en verrouillage et un moyen d'actionnement dudit loquet en déverrouillage à l'encontre dudit moyen ressort, les géométries de ladite crémaillère et dudit loquet étant respectivement agencées de manière à bloquer le coulissement dudit corps secondaire vers l'arrière et à permettre son coulissement vers l'avant sans avoir à déverrouiller ledit dispositif,
ledit appui-tête étant **caractérisé en ce que** :
• ledit loquet est pourvu de deux rails (9) disposés latéralement de part et d'autre, lesdits rails s'étendant longitudinalement et saillant verticalement,
• lesdits rails sont reçus en coulissement dans deux nervures (10) respectives prévues dans ledit corps secondaire,
de manière à bloquer ledit loquet en rotation selon un axe vertical lors de l'actionnement en réglage dudit corps secondaire.

2. Appui-tête selon la revendication 1, **caractérisé en ce que** la crémaillère (6) présente une pluralité de créneaux (12) dont la face avant (13) est inclinée par rapport à la verticale et dont la face arrière (14) est sensiblement verticale, le loquet (5) présentant des faces avant (15) et arrière (16) parallèles et sensiblement verticales.

3. Appui-tête selon la revendication 1, **caractérisé en ce que** la crémaillère (6) présente une pluralité de créneaux (12) dont les faces avant (13) et arrière (14) sont parallèles et sensiblement verticales, le loquet (5) présentant une face avant (15) sensiblement verticale et une face arrière (16) inclinée par rapport à la verticale.

4. Appui-tête selon l'une quelconque des revendications précédentes, **caractérisé en ce qu'**il comprend deux loquets (5) coopérant chacun avec une crémaillère (6) respective.

5. Appui-tête selon l'une quelconque des revendications précédentes, **caractérisé en ce qu'**une crémaillère (6) est disposée sur un organe de guidage (17a,17b) en coulissement du corps secondaire sur le corps principal.

6. Appui-tête selon la revendication précédente, **caractérisé en ce que** l'organe de guidage (17a,17b) est sous forme d'un tenon solidaire du corps secondaire (4), ledit tenon coulissant dans une mortaise (18a,18b) prévue dans le corps principal (3).

7. Appui-tête selon la revendication précédente, **caractérisé en ce qu'**il comprend un tenon supérieur (17a) et un tenon inférieur (17b) coulissant chacun dans une crémaillère supérieure (18a) et inférieure (18b) respective.

8. Appui-tête selon l'une quelconque des revendications précédentes, **caractérisé en ce qu'**un loquet (5) présente une partie de verrouillage (19) s'insérant dans la crémaillère (6), ladite partie étant disposée en zone médiane dudit loquet observé en vue longitudinale, ladite partie présentant une cote transversale (20) inférieure à 30 mm.

## Patentansprüche

1. Kopfstütze (1) für einen Kraftfahrzeugsitz, wobei die Kopfstütze Folgendes umfasst:
• einen Montagerahmen (2) an einer Rückenlehne des Sitzes,
• einen Hauptkörper (3), der an dem Rahmen montiert ist,
• einen sekundären Körper (4), der in Längsrichtung gleitend auf dem Hauptkörper montiert ist, sodass der sekundäre Körper eine Vielzahl von Längseinstellpositionen einnehmen kann, wobei der sekundäre Körper mit einer Wand (21) zum Aufnehmen des Kopfs eines Insassen des Sitzes versehen ist,
• eine Verriegelungsvorrichtung des sekundären Körpers in der gewählten Einstellposition, wobei die Vorrichtung eine Sperrklinke (5) umfasst, die vertikal gleitend auf dem Hauptkörper zwischen einer Verriegelungsposition, in der sie mit einer Verriegelungszahnstange (6) zusammenwirkt, die sich in Längsrichtung auf dem sekundären Körper erstreckt, und einer Entriegelungsposition, in der sie sich von der Zahnstange entfernt, um das Gleiten des sekundären Körpers freizugeben, montiert ist, wobei die Vorrichtung ferner eine Federeinrichtung (7) zum Betätigen der Sperrklinke beim Verriegeln und eine Betätigungseinrichtung der Sperrklinke beim Entriegeln gegen die Federeinrichtung umfasst, wobei die Geometrien der Zahnstange und der Sperrklinke jeweils ausgebildet sind, um das Gleiten des sekundären Körpers nach hinten zu sperren und sein Gleiten nach vorne zu ermöglichen, ohne die Vorrichtung entriegeln zu müssen,
wobei die Kopfstütze **dadurch gekennzeichnet ist, dass**:
• die Sperrklinke mit zwei Schienen (9) versehen ist, die seitlich auf beiden Seiten angeordnet sind, wobei sich die Schienen in Längsrichtung erstrecken und vertikal hervorstehen,
• die Schienen gleitend in zwei jeweiligen Rippen (10) aufgenommen sind, die in dem sekundären Körper bereitgestellt sind,
um eine Drehung der Sperrklinke um eine vertikale Achse bei der Einstellbetätigung des sekundären Körpers zu sperren.

2. Kopfstütze nach Anspruch 1, **dadurch gekennzeichnet, dass** die Zahnstange (6) eine Vielzahl von Zacken (12) aufweist, deren Vorderseite (13) in Bezug auf die Vertikale geneigt ist und deren Rückseite (14) im Wesentlichen vertikal ist, wobei die Sperrklinke (5) eine parallele und im Wesentlichen vertikale Vorder- (15) und Rückseite (16) aufweist.

3. Kopfstütze nach Anspruch 1, **dadurch gekennzeichnet, dass** die Zahnstange (6) eine Vielzahl von Zacken (12) aufweist, deren Vorder- (13) und Rückseite (14) parallel und im Wesentlichen vertikal sind, die Sperrklinke (5) eine im Wesentlichen vertikale Vorderseite (15) und eine in Bezug auf die Vertikale geneigte Rückseite (16) aufweist.

4. Kopfstütze nach einem der vorhergehenden Ansprüche, **dadurch gekennzeichnet, dass** sie zwei Sperrklinken (5) umfasst, die jeweils mit einer jeweiligen Zahnstange (6) zusammenwirken.

5. Kopfstütze nach einem der vorhergehenden Ansprüche, **dadurch gekennzeichnet, dass** eine Zahnstange (6) an einem Führungselement (17a, 17b) zum Verschieben des sekundären Körpers auf dem Hauptkörper angeordnet ist.

6. Kopfstütze nach dem vorhergehenden Anspruch, **dadurch gekennzeichnet, dass** das Führungselement (17a, 17b) in Form eines Zapfens ist, der fest mit dem sekundären Körper (4) verbunden ist, wobei der Zapfen in einem Schlitz (18a, 18b) gleitet, der in dem Hauptkörper (3) bereitgestellt ist.

7. Kopfstütze nach dem vorhergehenden Anspruch, **dadurch gekennzeichnet, dass** sie einen oberen Zapfen (17a) und einen unteren Zapfen (17b) umfasst, die jeweils in einer jeweiligen oberen (18a) und unteren (18b) Zahnstange gleiten.

8. Kopfstütze nach einem der vorhergehenden Ansprüche, **dadurch gekennzeichnet, dass** eine Sperrklinke (5) einen Verriegelungsabschnitt (19) aufweist, der sich in die Zahnstange (6) einfügt, wobei der Abschnitt in einem mittleren Bereich der in der Längsansicht betrachteten Sperrklinke angeordnet ist, wobei der Abschnitt ein Quermaß (20) von weniger als 30 mm aufweist.

## Claims

1. A headrest (1) for a motor vehicle seat, said headrest comprising:
• a frame (2) for mounting on a backrest of said seat,
• a main body (3) mounted on said frame,
• a secondary body (4) mounted so as to slide longitudinally on said main body, such that said secondary body can assume a plurality of longitudinal adjustment positions, said secondary body being provided with a wall (21) for receiving the head of an occupant of said seat,
• a device for locking said secondary body in the selected adjustment position, said device comprising a latch (5) mounted so as to slide vertically on said main body between a locked position, in which it engages with a locking rack (6) extending longitudinally on said secondary body, and an unlocking position, in which it moves away from said rack to release the sliding movement of said secondary body, said device further comprising a spring means (7) for actuating said latch into the locking position and a means for actuating said latch into the unlocking position against said spring means, the geometries of said rack and said latch being respectively arranged so as to block the rearward sliding of said secondary body and to allow its forward sliding without having to unlock said device,
said headrest being **characterised in that**:
• said latch is provided with two rails (9) arranged laterally on either side, said rails extending longitudinally and projecting vertically,
• said rails are slidably received in two respective ridges (10) provided in said secondary body,
so as to lock said latch against rotation about a vertical axis when said secondary body is actuated for adjustment.

2. Headrest according to claim 1, **characterised in that** the rack (6) has a plurality of notches (12) whose front face (13) is inclined relative to the vertical and whose rear face (14) is substantially vertical, the latch (5) having parallel and substantially vertical front (15) and rear (16) faces.

3. Headrest according to claim 1, **characterised in that** the rack (6) has a plurality of notches (12) whose front faces (13) and rear faces (14) are parallel and substantially vertical, the latch (5) having a substantially vertical front face (15) and a rear face (16) inclined relative to the vertical.

4. A headrest according to any one of the preceding claims, **characterised in that** it comprises two latches (5), each cooperating with a respective rack (6).

5. A headrest according to any one of the preceding claims, **characterised in that** a rack (6) is arranged on a guide member (17a, 17b) allowing the secondary body to slide on the main body.

6. A headrest according to the preceding claim, **characterised in that** the guide member (17a, 17b) is in the form of a tenon integral with the secondary body (4), said tenon sliding in a mortise (18a, 18b) provided in the main body (3).

7. A headrest according to the preceding claim, **characterised in that** it comprises an upper tenon (17a) and a lower tenon (17b), each sliding in a respective upper (18a) and lower (18b) rack.

8. A headrest according to any one of the preceding claims, **characterised in that** a latch (5) has a locking portion (19) engaging with the rack (6), said portion being located in the central region of said latch when viewed in longitudinal section, said portion having a transverse dimension (20) of less than 30 mm.
